# EUROPÄISCHE PATENTSCHRIFT

(11) **EP 1 827 666 B1**
(45) Veröffentlichungstag und Bekanntmachung des Hinweises auf die Patenterteilung: **30.03.2011**
(21) Anmeldenummer: 05804209.4
(22) Anmeldetag: 29.11.2005
(51) Int. Cl.: B01F 5/06, B01F 11/00, B01F 15/02, B29C 31/06, B29C 31/04, B29C 31/00

(54) **MISCHREAKTOR UND VERFAHREN ZUM KONTINUIERLICHEN AUSSTOSSEN EINES BEHANDELTEN STOFFES MIT EINEM DERGESTALTEN MISCHREAKTOR**
MIXING REACTOR AND METHOD FOR CONTINUOUSLY EJECTING A TREATED SUBSTANCE USING SAID MIXING REACTOR
REACTEUR DE MELANGE ET PROCEDE POUR PRODUIRE EN CONTINU UNE MATIERE TRAITEE A L'AIDE D'UN TEL REACTEUR DE MELANGE

(30) Priorität: 01.12.2004 CH 19862004
(43) Veröffentlichungstag der Anmeldung: 05.09.2007
(73) Patentinhaber: Hürlimann, Hans P., 8704 Herrliberg (CH)
(72) Erfinder: Hürlimann, Hans P., 8704 Herrliberg (CH)
(74) Vertreter: Frei Patent Attorneys
(86) Internationale Anmeldenummer: PCT/CH2005/000708
(87) Internationale Veröffentlichungsnummer: WO 2006/058447

(56) Entgegenhaltungen:
- EP-A- 0 294 733
- CH-A- 542 699
- CH-A- 694 015
- DE-A1- 1 930 787
- DE-A1- 4 423 652
- DE-B1- 1 504 699
- DE-C- 836 249
- DE-U1- 8 626 562
- DE-U1- 20 012 807
- FR-A- 2 152 452
- US-A- 4 592 711
- US-A- 5 230 852
- US-A1- 2004 120 217
- US-A1- 2004 125 690
- PATENT ABSTRACTS OF JAPAN Bd. 018, Nr. 506 (C-1252), 22. September 1994 (1994-09-22) -& JP 06 170198 A (SUMITOMO METAL MINING CO LTD), 21. Juni 1994 (1994-06-21)

## Beschreibung

Die Erfindung betrifft einen Mischreaktor und ein Verfahren zum kontinuierlichen Ausstossen einer Mischung, vorzugsweise einen Mischreaktor zum Mischen von Stoffen, insbesondere zum Mischen von makromolekularen Komponenten, wie hochviskoelastische Flüssigkeiten und Einmischen von festen Mischungskomponenten, bspw. Rohkautschuk und Russ.

Eine Vorrichtung zum Mischen von Stoffen ist aus der Schrift CH 542699 bekannt. Darin wird ein zu behandelnder Stoff von einem Druckzylinder mittels Presskolben durch einen Verbindungskanal in einen zweiten Druckzylinder gepresst. Der Verbindungskanal befindet sich in einem Düsenblock, welcher leicht demontierbar zwischen den Druckzylindern angeordnet ist. Diese Vorrichtung bietet gegenüber beispielsweise Flügelmischern den Vorteil, dass im Gegensatz zum Mischungsverfahren von fliessfähigen Materialien durch Scherung, in kürzerer Zeit ein feinerer Verteilungsgrad (striation thickness) und damit eine homogenere Mischung erreicht werden. Auch entsteht durch das Bearbeiten (Mastizieren) von hochviskoelastischen Flüssigkeiten reichlich dissipierte Prozesswärme, welche im Material unerwünschte chemische Prozesse, wie das Vernetzen von Molekülen, auslösen kann oder wärmeempfindliche Materialien gefährdet. Auch verringert eine erhöhte Temperatur die Viskosität des Mischgutes, so dass die für eine Dispergierung notwendigen hohen inneren Schubspannungen nicht erreicht werden. Die Abführung der Wärme ist auch bei einer Kühlung des Düsenblocks nicht ausreichend. Auch ist die zeitraubende Entnahme einer Mischung aus der Anlage zum Zweck einer Zwischenkühlung aus wirtschaftlichen Gründen unerwünscht.

Aufgabe der Erfindung ist es, gegenüber der Lösung nach der Schrift CH 542699, die Vorrichtung vorgenannter Art prozesstechnisch zu verbessern und damit die Durchführung des Mischungsverfahrens zu vereinfachen und wirtschaftlich zu verbessern.

In einem Verfahren zum Mischen von Stoffen kann deshalb einem zu behandelnden Stoff, wie beispielsweise Kautschuk, Gummi oder Polyurethan, eine pulverförmige Mischungskomponente, wie beispielsweise Russ, Füllstoffe oder Schwefel, in Form einer Suspension beigemischt werden. Die Suspensionsflüssigkeit dient als Prozessflüssigkeit, welche ein Verklumpen unter Druck verhindert und wodurch sich der durch Wärmedissipation erhitzte Compound abkühlt. Zufuhr der Mischungskomponente und Abfuhr der Prozesswärme erfolgt vorzugsweise schrittweise.

Die Wärmezufuhr wird vom Prozesscomputer laufend aus der Umsetzung der mechanischen Mischenergie in Wärme errechnet, ebenso die abgefühlte Wärmeenergie aus der Kondensatmenge des verdampften Prozesswassers und der entsprechenden Verdampfungswärme von Wasser bei der vorliegenden Temperatur und dem herrschenden Druck. An den mittels einer Temperatursonde während des Prozessablaufs regelmässig vorgenommenen Temperaturmessungen lassen sich so für jeden zu mischenden Stoff bzw. Compound die Wärmekapazitätswerte aus der entsprechenden Wärmebilanz rechnen. Ist die Wärmekapazität für eine bestimmte Mischung erst einmal bekannt, kann die Prozesstemperatur aus der Wärmebilanz laufend berechnet und angezeigt werden, so dass die Temperaturmessung entfallen kann. Eine stufenweise Eingabe von Komponenten, sowie die Abfuhr von Wärme, erlaubt eine bessere Kontrolle der Prozess- und Reaktionswärme.

Ein zu behandelnder Stoff, beispielsweise eine Rohkomponente oder eine Vermischung, wird in einen Druckzylindern eingehüllt Dieser Druckzylinder ist bei geschlossener Vorrichtung über einen Düsenblock mit einem zweiten Druckzylinder verbunden. Die Rohkomponente oder Vormischung wird bevorzugt mittels Presskolben durch mindestens eine Öffnung im Düsenblock in den zweiten Druckzylinder gepresst. Das Zumischen weiterer Komponenten geschieht als Suspension über eine Zuleitung zum einen Druckzylinder, wobei das Zumischen vorzugsweise durch Steuerung eines Ventils dosierbar ist.

Das Abführen von Prozesswärme geschieht durch Verdampfung der Prozesswärme unter Vakuum, über eine Zuleitung zum einen Druckzylinder und wird ebenfalls vorzugsweise durch ein steuerbares Ventil geregelt. Das Abführen von Prozesswärme kann nach jedem Durchgang des zu behandelnden Stoffes durch den Düsenblock geschehen. Damit wird verhindert, dass sich der Stoff zu sehr erwärmt und sich dabei die Viskosität des zu behandelnden Stoffes in einem wirkungsarmen Bereich bewegt und/oder unerwünschte chemische Prozesse ausgelöst werden. Die Temperatur wird jedoch hoch genug gehalten, um ideale Fliesseigenschaften (Viskosität) und damit Mischungseigenschaften zu gewährleisten. Beim Verfahren zum Mischen von Rohkautschuk mit Russ wird beispielsweise die Temperatur der Mischung bevorzugt unter 100°C, typischerweise um 70°C gehalten.

Das Verfahren zum Mischen von Stoffen ist üblichen Mischverfahren nicht nur aufgrund einer direkten und höchst effizienten Kühlung durch möglichst grossflächige Verdampfung überlegen, welche beispielsweise einer Kühlung eines Aussenzylinders im Falle eines Mischextruders oder Kokneters, oder einer Kammerwand und Kurbel im Falle eines Innenmischers, gegenübersteht, in welchen die Kühlung indirekt durch Wärmeleitung über die Maschine bzw. deren Maschinenteile erfolgt. Das erfindungsgemässe Verfahren gewährleisten auch eine homogene Temperaturverteilung in einer Mischung, die als ungeordnetes, lockeres Haufwerk in Form von dünnen Extrudaten vorliegt. Dies deshalb, weil ein eingestellter Sollwert des Vakuums den Dampfdruck und damit die Bandbreite der Verdampfungstemperatur insbesondere auch in solchen Mischungen begrenzt. Zudem erlauben die Verbesserungen durch das Verfahren einen viel intensiveren Misch- oder Knetvorgang bzw. einen viel grösseren Energieeintrag ohne Zwischenkühlung ausserhalb der Vorrichtung.

Durch das Abführen von Prozesswärme wird die Mischung gekühlt und gleichzeitig getrocknet. Die Kühlung geschieht unter technischem Vakuum, wobei dazu eine zusätzliche Vakuumpumpe an einen Druckzylinder angeschlossen sein kann. Das vollständige Trocknen der Mischung kann auf dieselbe Art geschehen.

In einer bevorzugten Ausführungsform umfasst die Vorrichtung mehrere Düsenblöcke, welche ohne Demontage der Anlage gegeneinander austauschbar sind. Die Düsenblöcke sind beispielsweise auf einem, zwischen den zwei Druckzylindern schiebbaren, Schiebetisch angeordnet. Zudem sind die Düsenblöcke unterschiedlich gestaltet, in dem sie beispielsweise eine unterschiedliche Anzahl Öffnungen, unterschiedliche Öffnungsdurchmesser und/oder andere Oberflächenstrukturen aufweisen. Unterschiedliche Oberflächenformen von Düsenblöcken können insbesondere einen Druckverlust bei gegebenem Materialdurchsatz mindern, indem sie engste, schubspannungsreiche, mischinaktive Abschnitte eines Düsenkanals möglichst kurz gestalten. Ein Austauschen von Düsenblöcken ohne Demontage der Anlage erhöht die Effizienz des Verfahren nicht nur durch Arbeitseinsparung, sondern auch dadurch, dass die in den Druckzylindern herrschenden Mischungsbedingungen in einem günstigen Bereich, insbesondere auch konstant gehalten werden können. Ein Austauschen der Düsenblöcke im Zuge eines Mischvorgangs, ohne Entnahme der Mischung aus der Maschine, bietet den weiteren Vorteil, dass die maschinellen Bedingungen, vorzugsweise per Computersteuerung, fortwährend einer sich verändernden Viskosität der Mischung und den anstehenden unterschiedlichen Prozessabschnitten angepasst werden können. Dabei ist auch eine Anpassung an unterschiedliche Prozessabschnitte, wie beispielsweise Mastizieren, Zumischen, Homogenisieren und abschliessendes Extrudieren, bei im wesentlichen gleichen Kolbengeschwindigkeiten und/oder Arbeitsdrücken möglich. Die Verwendung von speziellen Düsenblöcken erlaubt zudem eine Profilextrusion, d. h. ein Ausstossen der fertigen Mischung in der gewünschten Form, z.B. als Material in Bahnen, folienähnlich, schlauchförmig, etc..

Aus der Gebrauchsmusterschrift DE 86 26 562 ist eine relativ einfach aufgebaute Beschickungsanlage für Spritzgussmachinen offenbart. Darin werden mehrere Materialbehälter vertikal verschiebbar übereinander angeordnet. Eine Entleerung eines Behälters geschieht mittels eines horizontal verschiebbaren Entleerkolbens. Das Material wird dabei nicht gemischt.

Für das Verfahren zum Mischen werden vorzugsweise Düsenblöcke ausgewählt, bzw. solche Düsenblöcke zwischen die Druckzylinder eingeschoben, in denen die Öffnungen in den Blöcken auf den Düsenblockquerschnitt, die Presskraft der Mischkolben und die momentane Viskosität des zu behandelnden Materials abgestimmt ist und einen optimalen Durchsatz ergeben. Beispielsweise wird für hochviskoelastische Flüssigkeiten mit einer Viskosität von <10⁷ Pas, bspw. Rohkautschuk, ein Verengungsverhältnis von 4 von Zylinderquerschnitt zum Querschnitt aller Öffnungen im Düsenblock gewählt. Bei gleichbleibender Anzahl Öffnungen beträgt das Verengungsverhältnis ca. 100 für Flüssigkeiten von <10⁵ Pas. Solch feine Düsenblöcke eignen sich sehr gut zum Einmischen von in Flüssigkeit suspendiertem Pulver in eine hochviskoelastische Matrix.

Das Einmischen von festen Mischungskomponenten als Suspension bringt zusätzlich zum wärme- bzw. kühlungstechnischen Vorteil auch die Möglichkeit drucksensitive Komponenten, wie beispielsweise Russ oder Kreide, beizumischen. Diese neigen zu Brikettierung, was durch die, diese Komponenten umgebende, Flüssigkeit weitgehend verhindert werden kann.

In einer bevorzugten Ausführungsform wird die feste Mischungskomponente, welche typischerweise pulverförmig ist, vorbehandelt, um den Korndurchmesser zu verkleinern. Dies kann je nach Eigenschaften der suspendierten Komponente durch bekannte Verfahren wie im einem Kugelbett, in einer Dispergierwalze, im Kollergang, o.ä. erfolgen. Dadurch ist eine feinere Verteilung (Homogenisierung, striation thickness S) der festen Komponente in einer Matrix möglich, auch bei nur sehr wenigen, z. B. 2, 3 oder 4, Durchgängen der Mischung durch einen Düsenblock.

Um möglichst allen Mischungsteilen die gleiche Behandlung zukommen lassen zu können, sollten die Mischungskaznmern am Ende jedes Arbeitstaktes vollständig entleert werden. Dadurch wird auch eine rückstandsfreie Entleerung der Maschine bei beendigter Extrusion ermöglicht. Eine solch vollständige Entleerung geschieht vorzugsweise durch eine korrespondierende, vorzugsweise ineinandergreifende Gestalt von Düsenoberfläche und Presskolbenoberfläche. Damit wird ein sehr enges mischtechnisches Verweilzeitspektrum gewährleistet.

Indem die Pressoberfläche mindestens eines Presskolbens zu der oder den Öffnungen des Düsenblocks bzw. dessen Oberfläche, korrespondierende Formen aufweist, kann das Verfahren auch bezüglich Materialeinsparungen und insbesondere bezüglich der Reinigung der Vorrichtung freundlicher gestaltet werden. Durch Verschieben des Presskolbens kann dadurch im wesentlichen der gesamte Inhalt vom einen in den anderen Druckzylinder überführt werden. Dadurch erübrigt sich die Reinigung des einen Druckzylinders und gegebenenfalls auch die des Düsenblocks. Ein Düsenblock kann auch beidseitig mit solche Strukturen versehen sein.

In heute gängigen Verfahren werden feste Mischungskomponenten mit mittleren Korngrössen von mindestens ca. 100µm verwendet und eine Verteilung von S≈0.1mm erreicht. Jede feine Verteilung S<0.01mm wird heute einem nachgeschalteten Walzwerk überbunden. Dabei ist infolge der gängigen mittleren Körnung der pulver- bzw. pastenförmigen Füllstoffen um 0.01mm jede unter diesen Mittelwert reichende Verteilungsgüte sinnlos; d. h. dass in jedem Fall die Körnung durch einen getrennten Prozess, z. B. durch den Materiallieferanten vorgängig verfeinert werden muss.

Mit der genannten Vorrichtung und dem Verfahren zum Mischen sind bei ähnlichen oder kürzeren Mischdauern Verteilungen von S < 0.1 mm, vorzugsweise S ≤100nm, bspw. 40-80 nm möglich. Dazu wird die feste Mischungskomponente bevorzugt vorbehandelt, so dass die mittlere Korngrösse weniger als 100µm, vorzugsweise weniger als 1µm, beispielsweise etwa 80nm oder 100nm beträgt. Solch feine Verteilungen sind auf hydraulischem Wege mit verwendeten Korngrössen von ≥100µm während des Mischens nicht erreichbar.

Die gesamte Vorrichtung ist vorzugsweise computergesteuert, so dass sämtliche Verfahrensschritte des Mischprozesses, inklusive Extrusion des fertigen Materials in einer gewünschten Form (Profilextrusion) vollautomatisch ausgeführt werden können. Die Vorrichtung bietet somit nicht nur den Vorteil, dass sämtliche Schritte eines Mischprozesses, inkl. Mastikation und Profilextrusion, in einer einzigen Vorrichtung vereinbar sind, sondern mit einer vollautomatischen Steuerung auch noch die Möglichkeit, dass das gesamte Behandlungsverfahren von einer Person durchführbar ist. Nur aufgrund des Einbaus geeigneter Wechseldüsen und einer effizienten Kühlung ist es möglich sämtliche Verfahrensschritte, welche bei einem Innenmischprozess auftreten, in einer einzigen Anlage zu kombinieren. Insbesondere das Mastizieren und die Extrusion der fertigen Mischung in der gewünschten Form (Profilextrusion) sind bisher auf separaten Vorrichtungen durchzuführende Prozesse. Die Computersteuerung der Vorrichtung erlaubt auch eine Steuerung unter Bezugnahme einer Datenbank. Darin sind mehrere Verfahrens-, Vorrichtungs- und Materialparameter für unterschiedlichste Rohmaterialien und Mischungskomponenten gespeichert, auf welche zugegriffen werden kann. Zudem kann ein optimierter Verfahrensablauf abgespeichert und mit hoher Reproduktionsrate wiederholt werden, da sämtliche Prozessstufen im wesentlichen 'intern' ablaufen und keine externen Verfahrensschritte auf unterschiedlichen Vorrichtungen vorhanden sind.

Das Zusammenwirken von Mischenergiedisspation, Kühlung durch Vakuumverdampfung und effizientem Wärmedurchgang durch Extrusion lässt sich auch in der chemischen Reaktionstechnik vielfältig anwenden. Beispielsweise können exotherme Reaktionsinstabilitäten durch zusätzliche konvektive Kühlung im Düsenblock, durch zusätzliches schrittweises Einmischen einer neutralen Kühlflüssigkeit, aber auch durch Ausstossen der Mischung in eine separate Kühlkammer, vorzugsweise nach unten in ein Kühlbett, z. B. in eine Flüssigkeit oder ein Kugelbett, stabilisiert werden. In einer Kühlkammer kann die Mischung durch konvektive Wärmeabfuhr schockartig gekühlt werden. Die stufenweise Zufuhr von Komponenten erlaubt zudem eine Kontrolle der Reaktionswärme. Besonders bewährt hat sich auch eine Verschiebung des Siedepunktes eines Stoffes oder einer Mischung, in dem der Stoff unterschiedlichem Druck, insbesondere Vakuum, z.B. 0.5mbar-1bar, ausgesetzt wird. Dadurch kann eine Reaktion verzögert oder beschleunigt werden. Es ist damit aber auch möglich eine Reaktion bei genau einem gewünschten Schritt im Mischverfahren auszulösen. Oft ist ein Homogenisierungsschritt gewünscht, der jedoch ausser einer Homogenisierung keine weiteren Reaktionsprozesse auslösen soll. Bei einem Durchgang durch einen Düsenblock erhöht sich jedoch die Temperatur des Stoffes um einige wenige Grad, was je nach Material unerwünscht ist. Nun kann in einem vorletzten Schritt über ein angelegtes Vakuum eine Temperaturerniedrigung erreicht werden, welche vorzugsweise genau der Temperaturerhöhung entspricht, welche sich bei einem Nachfolgenden Durchgang durch einen Düsenblock ergibt. So hat der fertig bearbeitete Stoff die gewünschte Temperatur und Homogenität ohne Qualitätsverlust. Ein bei einem Mischüngs- oder Reaktionsprozess hat auch den allgemein bekannten Vorteil, dass eine Blasenbildung im zu mischenden Material verhindert oder verringert werden kann. Auch kann beispielsweise eine Oxidation oder Nitrierung eines Stoffes durch eine angelegtes Vakuum reduziert werden.

Insbesondere in der Industrie sind Mischreaktoren und Verfahren gewünscht, in welchen ein kontinuierliches Ausstossen eines Produktes möglich ist.

Dazu sind erfindungsgemäss mindestens ein, vorzugsweise mehrere Mischer und eine Extrusionspresse, im folgenden auch Einheiten oder Module genannt, nebeneinander modular angeordnet und über einen Transferwagen miteinander verbunden. Mittels des Transferwagens und Transferbehältern in der bevorzugten Form von Zylindern, wird ein Stoff von einer Eihfüllposition über eine oder mehrere Mischpositionen zur Extrusionspresse transferiert. Vorzugsweise sind der oder die Mischer, vorgenannte Vorrichtungen zum Mischen. Es können jedoch auch sehr einfach gestaltete Mischer sein, in welchen lediglich mastiziert und/oder homogenisiert wird, ohne Zugabe von Komponenten.

Ein Transferzylinder wird vorzugsweise nur zwischen zwei Positionen verschoben: in einer Position wird er gefüllt, dann in eine andere Position transferiert, in der er geleert wird, dann in die eine Position zurücktransferiert, dort wieder gefüllt, etc.. Dazwischen finden in den Mischern entsprechend Misch- und/oder Reaktionsprozesse statt. Ist die eine Position eine Einfüllposition wird Rohmaterial, welches ein einzelner Stoff aber auch bereits eine Mischung sein kann, in einen Transferbehälter gefüllt. Ist die andere Position eine letzte Position, so wird eine fertige Mischung in eine Extrusionspresse überführt und von dort ausgestossen bzw. extrudiert. Handelt es sich weder um eine erste noch um eine letzte Position, so werden Stoffe oder Mischungen in ungleichen Prozessstadien von einem zu einen nächsten Mischer zur weiteren Verarbeitung transferiert. Es ist selbstverständlich auch möglich einen Mischreaktor zu betreiben, in dem sämtliche Transferbehälter alle Stationen durchlaufen, d.h. zumindest bei Bearbeitung eines Materials, nur in eine Richtung zu transferieren. Sind die Einheiten des Mischreaktors nebeneinander in einer Linie aufgereiht, ist so ein kontinuierlicher Ausstoss dann im wesentlichen auf die totale Füllmenge sämtlicher Transferbehälter begrenzt. Nach einem Durchlauf sämtlicher Stationen können die Transferbehälter dann wieder zurück in ihre ursprüngliche Position transferiert werden, derart, dass ein erster Transferbehälter in einer Einfüllposition ist. Werden die Einheiten beispielsweise kreisförmig angeordnet, so ist ein kontinuierlicher Ausstoss auch bei einem Transfer der Transferbehälter in ausschliesslich einer Richtung möglich. Ein weiterer Vorteil der Ausführungsform, in der die Transferbehälter nur zwischen zwei Positionen hin und her transferiert werden ist, dass Oberflächen von Presskolben, welche vorzugsweise auf die Gestaltung eines Düsenblocks zugeschnitten sind, nur auf maximal zwei solcher Oberflächen zugeschnitten sein müssen. Da sich bei mehreren, z. B. drei oder vier Mischern, die einzelnen Düsenblöcke stark unterscheiden können, sind korrespondierende Presskolbenoberflächen und Düsenblöcke über ein gesamtes Spektrum eher schwierig oder gar nicht machbar. Auch können so, falls gewünscht, Innenflächen von Transferbehältern auf die jeweiligen Mischungen bzw. in den zwei speziellen Mischern ablaufenden Prozesse ausgestaltet sein.

Die einzelnen Mischer können unterschiedlich gestaltet sein, insbesondere können sie unterschiedliche Düsenblöcke aufweisen, so dass unterschiedliche Misch- und Reaktionsvorgänge in den einzelnen Mischern stattfinden. Es ist aber auch möglich zwei oder mehrere benachbarte Mischer identisch oder zumindest mit denselben Düsenblöcken auszustatten. Damit und mit der Anordnung von mehreren Mischern hintereinander, ist eine Normierung der Anlage auf günstigere und schneller verfügbare Standard-Ersatzteile möglich, auch ohne dass die Menge des zu bearbeitenden Stoffes reduziert werden muss. Auch ist die Anlage viel flexibler in Bezug auf wieviel, wie und was behandelt werden soll. Sind die einzelnen Einheiten des Mischreaktors individuell einstellbar, kann ein Mischer gezielt auf den in ihm ablaufenden Reaktions- und/oder Mischungsprozess eingestellt werden. Die Mischer sind so gezielt auf einen zu behandelnden Stoff in jedem Prozessstadium einstellbar oder gegebenenfalls auch einzeln austauschbar, z.B. zur Reinigung, Reparatur oder zum Anpassen des Mischreaktors an einen unterschiedlichen Mischprozess, der einen besonderen Mischer erfordert. Typische Prozessparameter sind der Misch- bzw. Kolbendruck, die Mischtemperatur, die Mischgeschwindigkeit, etc.. Durch die individuelle Gestaltung ist es beispielsweise auch möglich von einem zu behandelnden Rohmaterial auf ein anderes umzusteigen, ohne im wesentlichen den Prozess unterbrechen zu müssen. Gegebenenfalls lässt man einen Reinigungsstoff den gesamten Prozess, d.h. sämtliche Einheiten des Mischreaktors durchlaufen, um die Anlage von den Resten des vorhergehenden Stoffes zu reinigen. Im folgenden wird die Vorrichtung und das Verfahren zum Mischen, der Mischreaktor und das Verfahren zum kontinuierlichen Ausstossen anhand beispielhafter Verfahrensschritte und Ausführungsformen detaillierter beschrieben.

Es zeigt:
Fig. 1 die Vorrichtung in offenem Zustand,
Fig. 2 die Vorrichtung nach Einbringung der Mischungskomponente,
Fig. 3 die Vorrichtung bei Verdampfung von Prozesswasser,
Fig. 4 die Vorrichtung bei der Profilextrusion,
Fig. 5a, 5b einen Längsschnitt durch einen strukturierten Düsenblock zwischen zwei Druckzylindern und eine Aufsicht auf den Düsenblock gemäss Fig. 5a,
Fig. 6 einen Mischreaktor in einer Einfüllposition,
Fig. 7 den Mischreaktor gemäss Fig. 6 während dem Füllen eines Extrudierzylinders,
Fig. 8 Gesamtansicht des Mischreaktors.

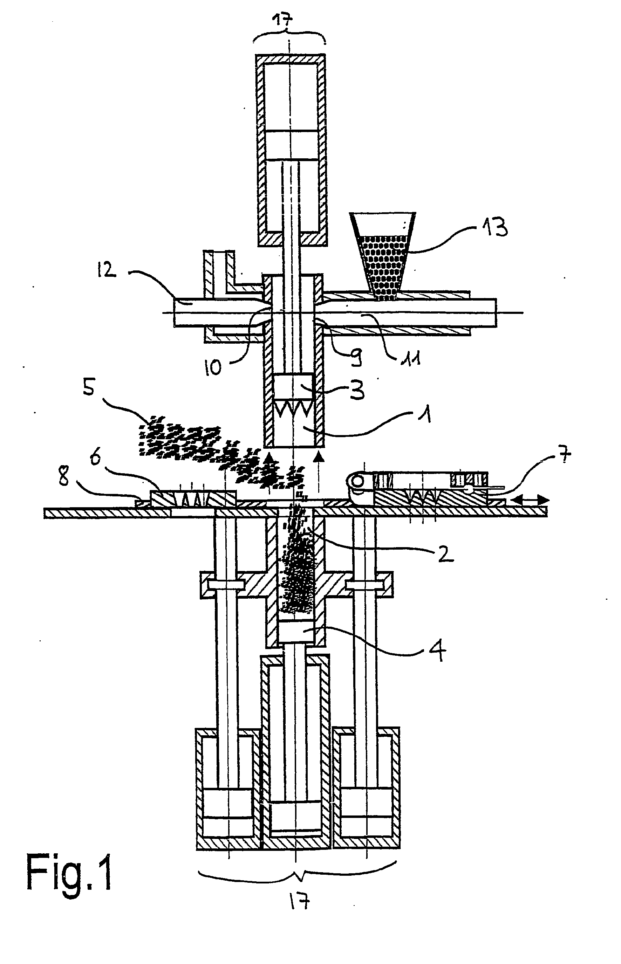

In **Figur 1** ist die Vorrichtung geöffnet dargestellt, mit teilweise zurückgezogenem oberen Presskolben 3 in einem oberen Druckzylinder 1 und zurückgezogenem unteren Presskolben 4 in einem unteren Druckzylinder 2. Die Druckzylinder sind zylinder- bzw. rohrförmig und koaxial angeordnet und weisen denselben Durchmesser auf. Ein Rohmaterial 5 oder eine Vormischung wird in den unteren Druckzylinder 2 gefüllt. Um die Öffnung des unteren Druckzylinders 2 freizugeben, sind die Düsenblöcke 6, 7 auf dem Schiebetisch 8 seitlich aus der Achse der Druckzylinder verschoben angeordnet. Nach dem Einfüllen des Rohmaterials 5 wird ein Düsenblock 6 zwischen den Druckzylindern angeordnet und mit Hilfe einer Kolbenanordnung 17 eng an den oberen Druckzylinder 1 gepresst. Mit dem unteren und oberen Presszylinder 3, 4 wird das Rohmaterial zur Mastikation durch die Öffnungen des Düsenblocks gepresst. Dies geschieht solange bis das Rohmaterial, im folgenden Matrix genannt, eine gewünschte Temperatur erreicht hat. Bei Rohkautschuk ist dies eine Temperatur von ca. 60°C-70°C und benötigt dazu etwa vier Düsenblockdurchgänge. Anschliessend wird der Matrix 5 eine Mischungskomponente in Form einer Suspension 13, z. B. Russ und Wasser, vorzugsweise portionenweise beigefügt. Dazu weist der obere Druckzylinder 1 eine erste, durch einen Balken 11 oder ein Ventil verschliessbare, Öffnung 9 auf. Diese erste Öffnung 9 ist mit einem Behälter verbunden, welcher die Suspension 13 enthält. Eine allfällige Vorbehandlung der Suspension, z.B. im Kugelbett, kann in diesem Behälter selber geschehen, aber auch in einem Behandlungsschritt, welcher dem Einfüllen der Suspension in den Behälter vorgeschaltet ist. Um das Mischungsverfahren zu optimieren, wird die Matrix vor der Zugabe von Mischungskomponenten vollständig in den unteren Druckzylinder gepresst. Dabei ist eine strukturierte Oberfläche des oberen Presszylinders, welche Oberfläche mit einer (Oberflächen)Struktur des Düsenblocks korrespondiert, hilfreich. Damit wird der Presskolben nicht nur an den Düsenblock, sondern im wesentlichen in den Düsenblock hinein geschoben. Dadurch werden Freiräume zwischen Presszylinder und Düsenblock verhindert oder zumindest minimiert.

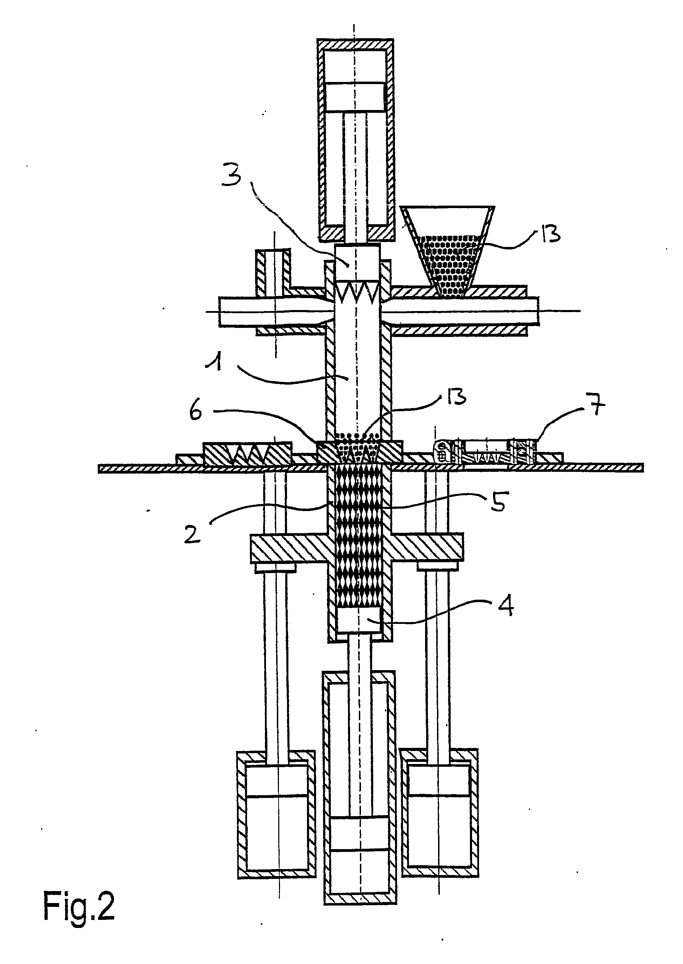

Wie in **Figur 2** dargestellt, wird die Suspension bei vollständig zurückgezogenem oberem Presskolben 3 und bei zurückgezogenem Banken 11 auf den strukturierten Düsenblock transferiert. Die Verwendung eines Balkens als Ventil erlaubt ein vollständiges Überführen der Suspension in den Druckzylinder ohne Rückstände in Zufuhrleitungen.

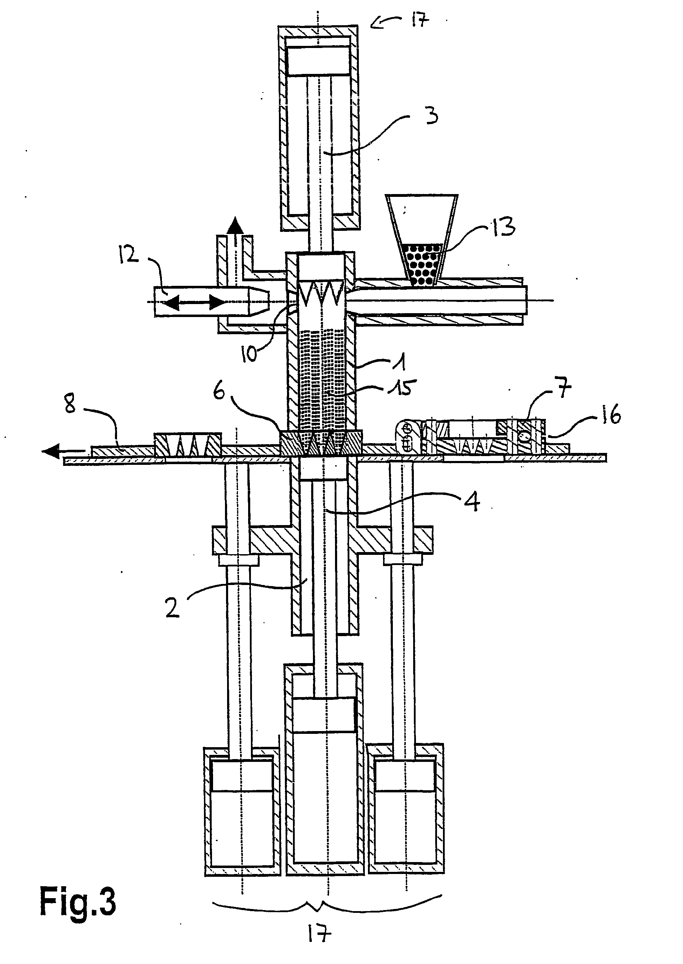

Der Düsenblock mit mehreren Öffnungen bewirkt, dass die hindurch gepresste mastizierte Matrix, wie in **Figur 3** gezeigt, mehrere Stränge 15 bildet, an welchen die Suspension anhaften kann. Durch die sehr grosse Oberfläche, die durch die Stränge entsteht, wird bereits beim ersten Durchgang eine sehr starke Mischung von Matrix und Mischungskomponente erreicht, indem kleinste Suspensionströpfchen der Suspensionsflüssigkeit in der Mischung verteilt werden. Auch kann damit von einer grossen Oberfläche die Flüssigkeit der Suspension, sog. Prozesswasser, verdampfen. Jeder Durchgang der Mischung durch den Düsenblock bewirkt einen Temperaturanstieg von ca. 10 °C und eine Erhöhung des Arbeitsdrucks in der Mischkammer. Um einen weiteren Temperaturanstieg zu verhindern, wird Prozesswärme abgeführt, in dem die Flüssigkeit der Suspension verdampft wird. Dazu weist der obere Druckzylinder eine zweite, wiederum durch einen Balken 12 oder ein Ventil, verschliessbare Öffnung 10 auf.

In Figur 3 ist der obere Druckzylinder 3 vollständig zurückgezogen und das Abführventil geöffnet, so dass Prozesswasser durch die zweite Öffnung 10 entweichen kann. Bevorzugt wird Prozesswasser unter kontrollierten Bedingungen verdampft, bspw. unter technischem Vakuum bei ca. 50 mbar. Dazu kann im Bereich der Abführöffnung eine Vakuumpumpe angeschlossen sein. Durch schrittweises Verdampfen des nassen Anteils der dispersen Phase unter technischem Vakuum wird eine laufende Abführung von dispergierter Mischenergie (Wärmedissipation) erreicht. Dabei können die Kühlsequenzen relativ kurz gehalten werden, weil die extrudierten Mischungsfäden 15 mit einem bevorzugten Durchmesser von 0.5-1.5mm, z. B. 0.8mm oder 1mm, einen steilen Temperaturgradienten und eine sehr grosse Oberfläche von beispielsweise 200 x Zylinderinnenfläche, aufweisen. Auch sind durch die hohe Verdampfung sehr hohe Mischdrücke von bis zu 400bar erreichbar. Mit dem Verfahren ist es möglich die Mischungstemperatur typischerweise unter 120°C, bevorzugt unter 90°C, z. B. bei 70-80°C, zu halten, so dass der Mischungsprozess nicht unterbrochen werden muss. Dies wäre mit herkömmlichen Vorrichtungen nicht möglich, in denen durch die Zylinderfläche oder durch die Düsenblockwände gekühlt wird und Temperaturen von bis zu 180 °C erreicht werden. Bei solch hohen Temperaturen werden in der Regel chemische Prozesse ausgelöst, wie bspw. die Vernetzung polymerer Komponenten, welche bei der Mastikation und Einmischung von Mischungskomponenten in ein Rohmaterial in der Regel unerwünscht sind.

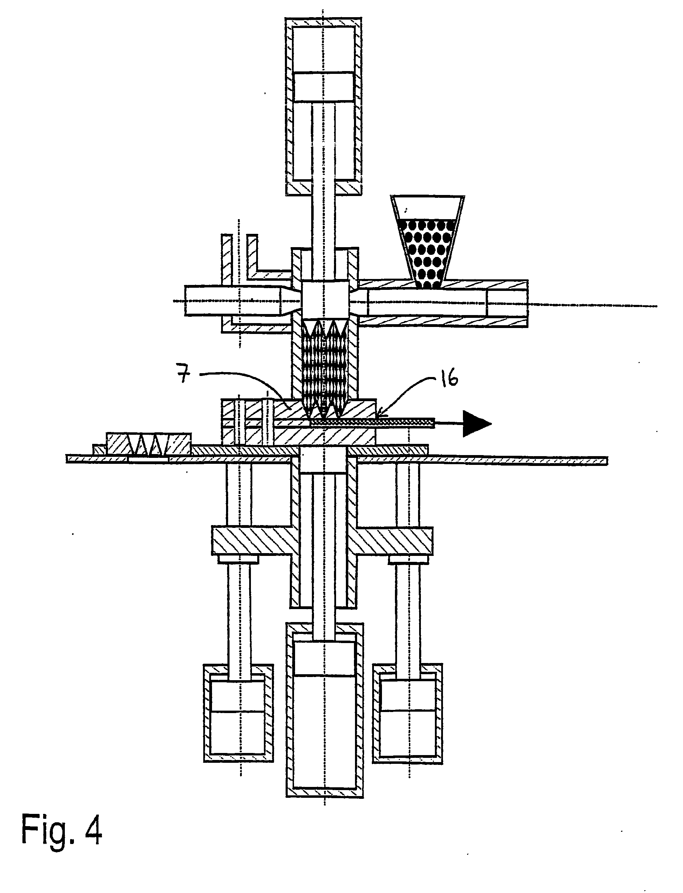

Wird das verdampfte Wasser kondensiert und gemessen, kann damit der Restwassergehalt der Mischung bestimmt und der Verlauf des Mischverfahrens beobachtet, kontrolliert und gegebenenfalls gesteuert werden. Nachdem die Mischung nach mehreren Mischzyklen vollständig, oder soweit gewünscht, getrocknet ist, kann der Düsenblock 6 durch einen auf dem Schiebetisch 8 angeordneten Spezialdüsenblock 7 ersetzt werden. In Figur 4 ist die Vorrichtung mit dem eingesetzten Spezialdüsenblock zur Herstellung folienähnlichen Materials gezeigt. Der Spezialdüsenblock 7 ermöglicht aufgrund seiner Gestaltung, ein Ausstossen der fertigen Mischung in Pfeilrichtung aus einer Öffnung 16 in einer gewünschten Form (Profilextrusion). Ist das ausgestossene Material folienförmig, kann die Mischvorrichtung mit einer zusätzlichen Vorrichtung zum Glätten des Folienmaterials, z.B. einer Walze, ergänzt werden.

Die in der Figuren 1 bis 4 gezeigte Kolbenanordnung 17 dient dem hydraulischen Antrieb der Presskolben 3, 4 in den Druckzylindern 1, 2, sowie einer optimierten Kraftübertragung beim Öffnen und Schliessen der gesamten Vorrichtung. Die Presskolben werden durch ausserhalb der Düsenzylinder koaxial angeordnete, doppelt wirkende Antriebszylinder bewegt. Die Druckzylinder können koaxial so gegeneinander verschoben werden, dass sich die Mischkammern wahlweise öffnen lassen, bspw. um Rohmaterialien einzugeben oder um die Kammern abzudichten. Eine ähnliche Kolbenanordnung ist bereits in CH 542699 beschrieben worden und soll hier nicht näher erläutert werden.

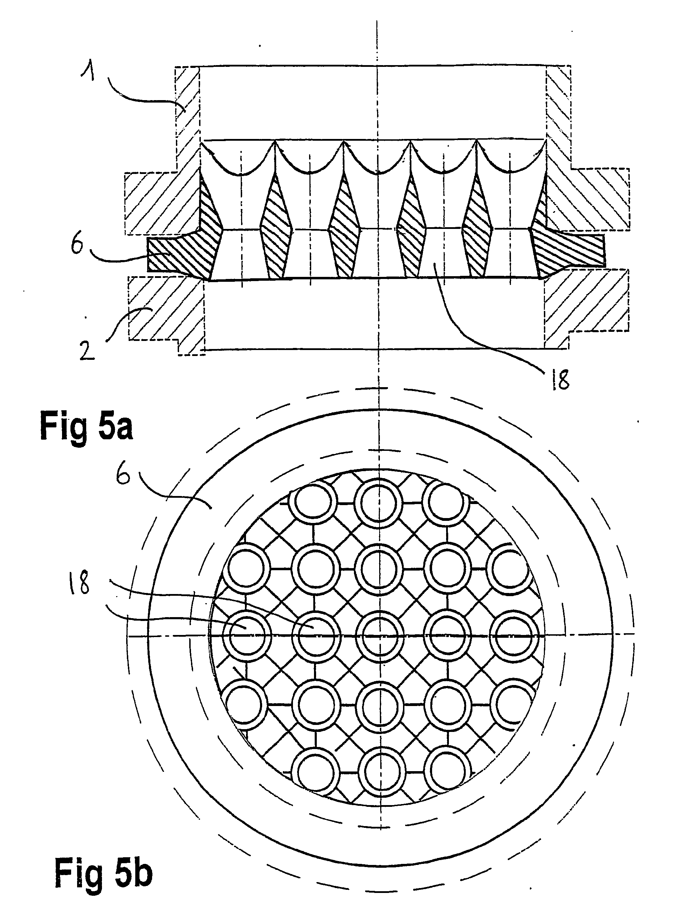

**Figur 5a** zeigt einen Schnitt durch einen strukturierten Düsenblock 6, wobei noch ein Teil des oberen und unteren Druckzylinders 1, 2 dargestellt sind. Dieser Düsenblock stellt einen 'feinen' Düsenblock dar, wie er bspw. zum Einmischen von in einer Flüssigkeit suspendiertem Pulver in eine hochviskoelastische Matrix, z. B. Russ in Wasser in Kautschuk, verwendet wird. Der Düsenblock 6 weist 21 Öffnungen 18 auf, durch welche das Material gepresst wird. Die Öffnungen haben bspw. einen Durchmesser von ca. 0.8mm bei einem Düsenblockdurchmesser von 160mm. Die Bereiche 19 zwischen den Öffnungen 18 sind gegen oben hin spitz zulaufend geformt und weisen nach innen gewölbte Seiten auf, derart dass kegelförmige Gegenstücke von oben im wesentlichen passgenau in die Öffnungen 18 eingeführt werden können. Die Pressfläche des oberen Presskolbens 3 ist vorzugsweise mit solchen, zu den Öffnungen 18 bzw. der Oberfläche des Düsenblocks korrespondierenden kegelförmigen, vorstehenden Ausformungen versehen. Bei einer derart strukturierten oberen Oberfläche des Düsenblocks, sind keine horizontalen Flächen vorhanden, auf denen sich Material anlagen könnte. Diese Oberfläche ermöglicht ein erleichtertes 'Abfliessen' von Material und ein gleichzeitiges Führen von Strukturen des Presszylinders.

Die Strukturen des Düsenblocks ermöglichen im wesentlichen ein erleichtertes Überführen von Mischgut von einer ersten in eine zweite Druckkammer und können unterschiedlichste Formen aufweisen. Die in der Figur 5b gezeigte Struktur an der oberen Oberfläche ist in abgewandelter Form auch an der unteren Oberfläche des Düsenblocks ausgebildet. In diesem Fall ist auch die Pressfläche des unteren Presskolbens korrespondierend strukturiert. Es ist auch möglich zur zusätzlichen Wärmeregulierung eine seitliche Zufuhr für Kühl- oder Heizmittel im Düsenblock vorzusehen (in der Figur nicht dargestellt).

Durch die Benutzung von mit Öffnungen versehenen Düsenblöcken, d.h. der Umstellung des Strömungsvorganges von Scheren auf Dehnen, sind bspw. Verteilungen (striation thickness) bei konstanter Zugkraft von <50nm erreichbar. Im beispielhaft gezeigten 'feinste' Düsenblock von 21 Öffnungen ä 0.8mm, muss eine Mischung dazu lediglich dreimal durch die Öffnungen gepresst werden. Unterstützt wird der Mischeffekt zusätzlich durch sogenannte Schmelzbrüche, die bei bestimmten Betriebsbedingungen (instabile Durchflussbedingungen) beim Durchgang der Mischung durch eine Öffnung hervorgerufen werden.

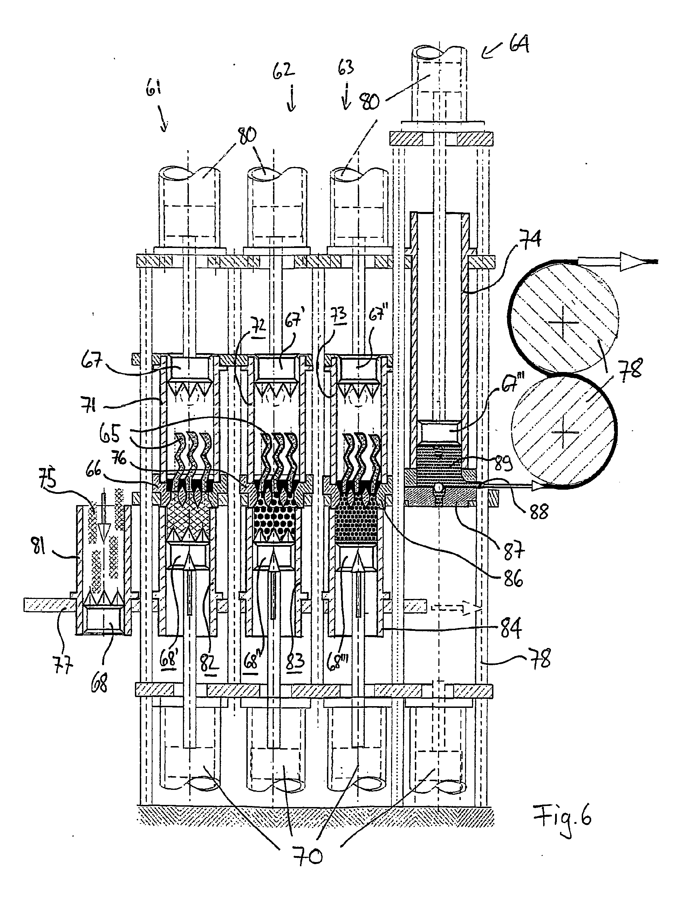

**Figur 6** zeigt einen Mischreaktor mit drei nebeneinander angeordneten Mischern 61, 62, 63 und eine daran anschliessende Extrudierpresse 64. Die Mischer sind über einen Transferwagen 77 (nur ausschnittweise gezeigt) miteinander verbunden. Die Mischer und die Extrudierpresse sind bis auf die unteren Transferzylinder 81, 82, 83, 84 fest, aber vorzugsweise auswechselbar, im Maschinengestell 78 montiert. Dies gilt auch für die Düsenblöcke 66, 76, 86 in den Mischern und den Spezialdüsenblock 87 der Extrudierpresse.

Der Mischreaktor ist in einer Position gezeigt, in der sämtliche Mischer gefüllt sind und eine fertige Mischung 89 extrudiert bzw. ausgestossen wird. Dabei befindet sich der erste Transferzylinder 81 in einer Einfüllposition und wird mit einem Rohstoff 75 gefüllt. Währendem wird in den drei Mischern jeweils unterschiedlich behandeltes Rohmaterial oder Mischungen gemischt, bis hin zur fertigen Mischung 89, welche aus einer Extrusionsöffnung 88 in der Extrusionspresse in einer gewünschten Form ausgestossen wird. Die Extrusionsöffnung befindet sich in einem Spezialdüsenblock 87 und ist beispielsweise als Breitbanddüse gestaltet, wobei das extrudierte Band nachfolgend über ein Walz-, Glätt- und/oder Besäumwerk 78 geführt wird. Ein solch nachgeschaltetes Verfahren kann auch eine vollständige Aushärtung des extrudierten Materials ermöglichen, beispielsweise eines Duroplasten, der bis zu Extrusion noch in einen plastisch verformbaren Zustand war.

Das Mischen geschieht in den einzelnen Mischern in an sich bekannter Weise, in dem das Material mit Hilfe von unteren und oberen Presskolben 68, 68', 68", 68"', 67, 67', 67", 67"' zwischen den Transferzylindern und oberen Mischzylindern durch Öffnungen in den Düsenblöcken 66, 76, 86 hin und her gepresst werden. Die durch die jeweiligen Düsenblöcke extrudierten Mischungsfäden 65 können in den Mischzylindern wiederum mit weiteren Materialien gemischt, gekühlt, geheizt oder anderweitig behandelt werden.

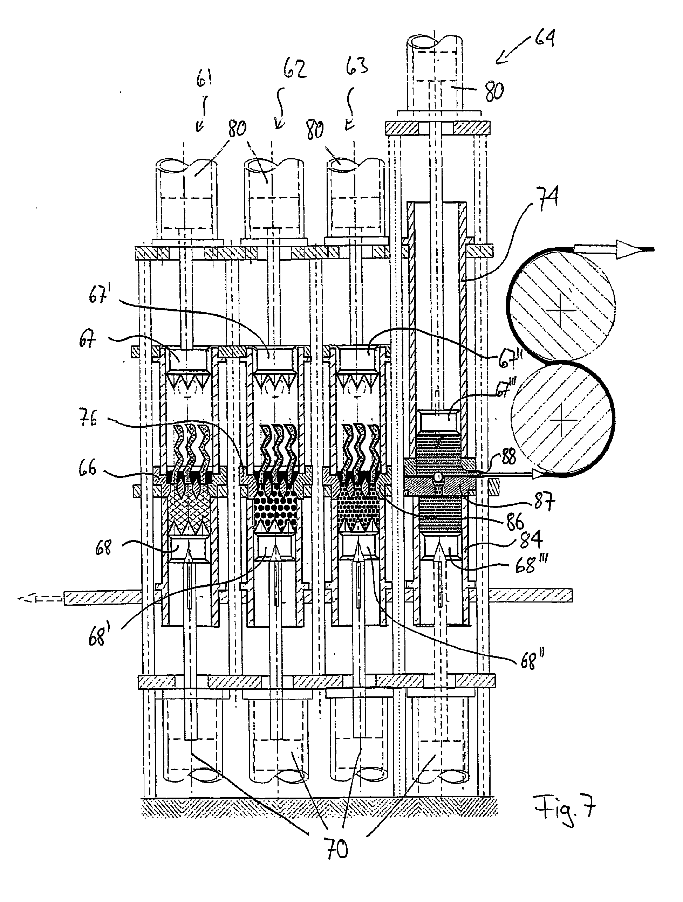

Ist der Füll- und die Mischprozesse in den einzelnen Mischern abgeschlossen so werden sämtliche unteren Presszylinder nach unten verschoben und die in den Mischern vorhandenen Mischungen mit Hilfe der oberen Presszylinder möglichst vollständig in die Transferzylinder gepresst. Anschliessend werden die Transferzylinder mit Hilfe des Transferwagen in der Figur in Pfeilrichtung nach rechts um eine Position weiter transportiert. Nun befindet sich der Mischreaktor in einer Position, wie in **Figur 7** gezeigt. Das eben eingefüllte Rohmaterial befindet sich nun im ersten Mischer 61, und die vorigen Mischungen in einem Mischer x+1, wobei x derjenige Mischer ist, in Welchem sich die Mischung vorher befunden hat (hier 1->2, und 2->3). Es ist beispielsweise möglich bereits während des Transfers eine beizumischende Komponente in einen Mischzylinder einzubringen. Vorzugsweise weist ein Mischzylinder dazu eine separate Öffnung auf, bevorzugt zusätzlich zu einer Öffnung für ein Vakuum. Dann wird bereits beim ersten Hochdrücken eines Materials durch einen Düsenblock, das Material mit der beigegebenen Komponente vermischt.

Die fertige Mischung, welche mit dem vierten und letzten Transferzylinder 84 vom dritten Mischer 63 zur Extrusionspresse transferiert wurde, wird nun mit dem zum letzten Transferzylinder gehörigen Presskolben 68'" durch einen Spezialdüsenblock 87 in den Extrusionszylinder 74 gepresst. Der Spezialdüsenblock weist als Durchgang zwischen den Zylindern im wesentlichen nur eine Öffnung, vorzugsweise in der Form eines Einweg- bzw. Rückschlagventils auf: Die fertige Mischung kann von unten nach oben in den Extrusionszylinder gepresst werden, aber nicht mehr in den letzten Transferzylinder zurückfliessen. Das Ventil kann beispielsweise eine einfache Kugel sein, die aufgrund der Gewichtskraft der im Extrusionszylinder befindlichen Masse und/oder aufgrund eines beaufschlagten Extrusionsdruckes nach unten gedrückt werden und dadurch die Öffnung im Spezialdüsenblock, welche zu diesem Zweck mit ungleichem Durchmesser ausgestaltet ist, z. B. konisch, verschliessen. Ein solches Rückschlagventil kann auch anders gestaltet und, z.B. pneumatisch oder magnetisch, betrieben werden.

Der Spezialdüsenblock weist eine Extrusionsöffnung 88 auf, welche hier eine seitliche Aussparung in einem zweigeteilten Spezialdüsenblock ist.

Ist die gesamte fertige Mischung in den Extrudierzylinder überführt und die Mischungen in den drei Mischern teilweise oder fertig behandelt, so wird das in den Mischern befindliche Material in die oberen Mischer gepresst und die leeren Transferzylinder werden um eine Position in Pfeilrichtung nach links verschoben. Wahren der erste Transferzylinder nun wieder in der Einfüllposition ist und gefüllt werden kann, können die Mischungen in den Mischern, falls noch nicht geschehen, fertig gemischt werden.

Die in den Mischbehältern befindlichen Massen sind in der Regel so dickflüssig bzw. fest, dass kein Material aufgrund der Schwerkraft durch die Öffnungen in den Düsen nach unten austreten kann. Sollen jedoch relativ flüssige Materialien in der Mischern behandelt werden, können auch Blenden oder andere Auslaufvorrichtungen unterhalb im Bereich der Düsenblöcke angebracht werden.

Vorzugsweise ist ein unterer Teil des Spezialdüsenblocks oder der gesamte Block, sowie auch die anderen Düsenblöcke absenkbar, zur Inspektion oder zum Auswechseln der Düsen. Die drei Düsenblöcke sind dazu vorzugsweise in einer gemeinsamen Platte eingebracht. Eine möglichst vollständige Entleerung des Transfer- und Extrusionszylinders, sowie des Spezialdüsenblocks erleichtert auch einen Wechsel von einem Mischungstyp zu einem anderen. Dies gilt auch für einen auswechselbaren Spezialdüsenblock, was durch die spezielle Anordnung des Mischreaktors mit separater Extrusionspresse ermöglicht wird. Ein Wechsel beispielsweise eines Materials welches bevorzugt eine Breitbandextrusionsdüse erfordert, kann einfach und auch ohne Vermischung der unterschiedlichen Mischungtypen durch ein Material ersetzt werden, welches bevorzugt als Granulat extrudiert wird. Die Materialien der Mischer sind auf die zu mischenden Materialien angepasst, beispielsweise aus harten Stahl, welcher entsprechend hohen Drucken, insbesondere auch Anpressdrucken der Zylinder gegeneinander bzw. gegen einen Düsenblock hin standhält, sowie aus entsprechend korrosionsfestem Material bspw. wenn fluorierte Kunststoffe verarbeitet werden.

Das Volumen des Extrasionszyllinders dient als Ausgleichsspeicher, in dem eine fertige Mischung zwischengespeichert werden kann, so dass eine kontinuierliche Extrusion möglich ist.

Die Oberfläche der ersten drei unteren und oberen Presskolben 68,68', 68", 67, 67', 67" weisen eine strukturierte Oberfläche auf, derart dass sie zu den jeweiligen Öffnungen in den Düsenblöcken 66,76,86 der Mischer korrespondieren. Dies erlaubt eine möglich vollständige Überführung der Mischungen von einem in den anderen Zylinder und auch eine möglichst vollständige Leerung bevor eine neue Mischung in einen Mischer gelangt. Dies ist ein weiterer Schritt, der eine gute Qualität des fertigen Produkts und dessen Herstellungskontrolle dient.

Die Oberfläche des letzten unteren und oberen Presskolbens 68"', 67'" ist zu diesem Zweck möglichst eben ausgestaltet, um passgenau an der flachen Ober- und Unterseite des Spezialdüsenblocks anzuliegen und ein Rückschlagventil nicht zu beinträchtigen.

Der Mischreaktor weist ferner Antriebszylinder 70, 80 auf, welche vorzugsweise fest im Maschinengestell eingebaut sind und mit welchen die Presskolben angetrieben werden. Das Maschinengestell 78 weist bevorzugt Freiräume unterhalb der Transferzylinder und oberhalb der Mischzylinder auf. Diese Freiräume erlauben eine Inspektion der Presskolben, wenn diese vollständig zurückgefahren sind.

Die Presskolben sind jeweils einem Transferzylinder zugeordnet und schliessen diesen nach unten hin ab, d.h. bilden den Boden eines Transferzylinders. Um einen Transfer der Zylinder zu ermöglichen, sind die Presskolben trennbar von einer Antriebsstange der Antriebszylinder angeordnet. Es können dazu Mittel im Presskolben vorhanden sein, wo eine Antriebsstange eingreifen kann.

Die Mischer und die Extrusionspresse sind bevorzugt mit individuellen Misch- oder Reaktionsparameter einstellbar und so an unterschiedliche zu mischende Materialien anpassbar. Beispielsweise reicht es, ein fast flüssiges Material, z. B. eine hochschmelzende Thermoplastmischung mit wenigen Atmosphären Pressdruck durch die Presskolben in einem Mischer zu beaufschlagen. Ein zähflüssiges Material, wie beispielsweise Kautschuk, verlang wesentlich höhere Drucke, bspw. bis zu 400bar. Die individuelle Einstellung der einzelnen Mischer inkl. der Extrasionpresse mit Extrusionsdüse, erlaubt somit nicht nur auf das zu bearbeitende Material bezogene genau eingestellte Bearbeitungsparameter des Rohmaterials bis zum fertigen Produkt, sondern auch das Einstellen des Mischreaktors auf sehr unterschiedliche und unterschiedlich zu bearbeitende Materialien.

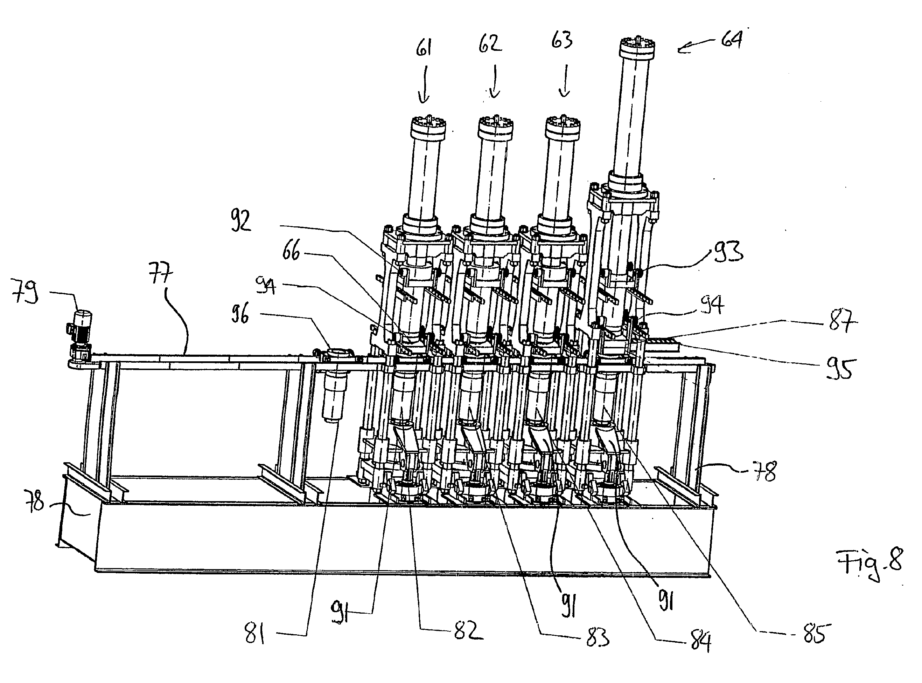

In **Figur 8** ist eine Gesamtansicht des Mischreaktors gemäss den Figuren 6 und 7 gezeigt. Zu sehen sind die Einheiten des Mischreaktors, drei Mischer 61, 62, 63 und eine Extrusionspresse 64, welche in einem Maschinengestell 78 befestigt und modular nebeneinander, vorzugsweise in gleichem Abstand zueinander, angeordnet sind. Antriebszylinder, Misch- und Extrudier-zylinder sind wie die Düsenblöcke ortsfest im Gestell montiert. Misch- und Extrudierzylinder, sowie Düsenblöcke sind mittels Mischzylinderwagen 92, Extrudierzylinderwagen 93 bzw. Düsenwagen 94 aus einer vertikalen Mischer- bzw. Extrusionspressenachse an entsprechend im Maschinengestell angebrachten Schienen horizontal ausfahrbar. Dies dient einer erleichterten Kontrolle, Reparatur, einem Ersetzen etc. der entsprechenden Teile. Die Einheiten sind über den Transferwagen 77 miteinander verbunden, wobei die Transferzylinder auf dem schienenartigen Transferwagen mit einem Transferantrieb 79 transferierbar sind. In der Figur sind zu demonstationszwecken in jeder Position des Mischreaktors Transferzylinder dargestellt. In der Regel sind jedoch nur so viele Transferzylinder wie Einheiten vorhanden. Mittels Zustelljoche 91, welche sich in den Positionen der Mischer und der Extrusionspresse befinden, werden die Transferzylinder vorzugsweise federnd gegen die Düsenblöcke gepresst. Drücke von gegen 1000bar sind dabei üblich, um ein seitliches Ausbrechen von Material aus den Mischern zu verhindern.

Ein erster Transferzylinder 81 befindet sich in einer Einfüllposition 96, während weitere Transferzylinder 82, 83, 84, 85 je den drei Mischern und der Extrusionspresse zugeordnet sind. Neben dem Spezialdüsenblock 87 der Extrusionspresse befindet sich ein Austritt 95 in der Form eines mit Rollen versehenen Bandes auf dem ein extrudiertes Produkt zu einer nächsten Station transportiert werden kann.

In einer bevorzugten Ausführungsform des Mischreaktors wird in einem ersten Mischer mastiziert, im zweiten Mischer Komponenten beigemischt und in einem dritten Mischer homogenisiert.

## Patentansprüche

1. Mischreaktor zum Mischen und kontinuierlichen Ausstossen eines Stoffes, aufweisend mindestens einen Mischer (61, 62, 63) und eine Extrusionspresse (64), wobei der mindestens eine Mischer und die Extrusionspresse über einen Transferwagen (77) miteinander verbunden sind, und wobei ein zu behandelnder Stoff mittels mindestens einem im Transferwagen (77) eingebrachten Transferzylinder (81, 82, 83, 84, 85) von einer Stoff-Einfüllposition zum mindestens einen Mischer und zur nachfolgenden Extrusionspresse transferierbar ist, so dass eine fertige Mischung (89) als kontinuierliches Produkt aus der Extrusionspresse ausstossbar ist.

2. Mischreaktor nach Anspruch 1, wobei jeder Mischer (61, 62, 63) einen unteren transferierbaren Transferzylinder (81, 82, 83, 84, 85) und einen oberen ortsfesten Mischzylinder (71, 72, 73) aufweist.

3. Mischreaktor nach Anspruch 1 oder 2, wobei jedem Transferzylinder (81, 82, 83, 84, 85) ein Presskolben (68, 68', 68", 68"') zugeordnet ist, welcher den Transferzylinder auch während eines Transfers nach unten abschliesst.

4. Mischreaktor nach einem der Ansprüche 1-3, wobei Mischparameter, insbesondere Mischdruck, Mischtemperatur und Mischgeschwindigkeit, eines jeden Mischers (61, 62, 63) individuell einstellbar sind.

5. Mischreaktor nach einem der Ansprüche 1-4, wobei mindestens einer der Mischer (61, 62, 63) eine Vorrichtung mit folgenden Merkmalen umfasst: zwei rohrförmige Druckzylinder (1, 2) und ein zwischen den Druckzylindern angeordneter Düsenbiock (6, 7), wobei der Düsenblock mindestens eine Öffnung (18) aufweist, um einen Durchtritt eines zu behandelnden Stoffs (5) von einem Druckzylinder in den anderen Druckzylinder zu ermöglichen, wobei in den Druckzylindern verschiebbare Presskolben (3, 4) vorhanden sind, und wobei kombinierte Mittel (9, 11) zum Zuführen eines festen Mischungsbestandteils und Mittel zum Zuführen einer Prozessflüssigkeit zu einem der beiden Druckzylinder vorgesehen sind, sowie Mittel zur kontrollierten Verdampfung der Prozessflüssigkeit (10, 12), wobei während des Mischprozesses die festen Mischungsbestandteile und Prozessflüssigkeit gleichzeitig dem zu behandelnden Stoff (5) zuführbar sind und Prozessflüssigkeit schrittweise abführbar ist.

6. Mischreaktor nach Anspruch 5, wobei die unterschiedlichen Düsenblöcke (6, 7) dieselbe Anzahl Öffnungen (18), aber unterschiedliche Öffnungsdurchmesser aufweisen.

7. Mischreaktor nach Anspruch 5 oder 6, wobei die mindestens eine Öffnung (18) des Düsenblocks (6, 7) und eine Oberfläche des einen Presskolbens (3) zueinander korrespondierende Formen aufweisen, wobei durch Verschieben des Presskolbens (6) im wesentlichen der gesamte zu behandelnde Stoff (5) vom einen in den anderen Druckzylinder überführbar ist.

8. Mischreaktor nach einem der Ansprüche 5-7, wobei der feste Mischungsbestandteil Russ, die Prozessflüssigkeit Wasser und der zu behandelnde Stoff Rohkautschuk ist.

9. Mischreaktor nach einem der Ansprüche 1-8, wobei sämtlicher Transferzylinder (81, 82, 83, 84, 85) in gleichem Abstand zueinander angeordnet sind.

10. Verfahren zum kontinuierlichen Ausstossen eines behandelten Stoffes mit einem Mischreaktor nach einem der Ansprüche 1-9, **dadurch gekennzeichnet, dass** ein zu behandelnder Stoff in einen vordersten, ersten Transferzylinder (81) gefüllt wird und zu einer ersten Mischposition transferiert wird, während weitere Transferzylinder (82, 83, 84, 85) gleichzeitig zu einer weiteren Mischposition und/oder im Falle eines letzten Transferzylinders (84,85) in eine Extrusionsposition verschoben werden.

11. Verfahren nach Anspruch 10, mit den folgenden Schritten:
a) Füllen eines ersten Transferzylinders (81),
b) Verschieben sämtlicher Transferzylinder (82, 83, 84, 85) um eine Position in eine gemeinsame Richtung,
c) Befördern eines in den Transferzylindern befindlichen Stoffes durch einen mit mindestens einer Öffnung versehenen Düsenblock (66, 76, 86) in einen oberen Mischzylinder (71, 72, 73) durch Verschieben eines einem Transferzylinder zugeordneten Presskolbens (68, 68', 68", 68"'), wobei im Falle eines letzten Transferzylinders (84, 85) der Düsenblock ein Spezialdüsenblock (87) und der Mischzylinder ein Extrusionszylinder (74) ist.
d) Zurücktransferieren sämtlicher Transferzylinder in eine gemeinsame, aber entgegengesetzte Richtung,
e) Wiederholen der Schritte a)-d).

12. Verfahren nach Anspruch 11, wobei zum Abschluss eines Verfahrens Schritt a) weggelassen wird.

13. Verfahren nach einem der Ansprüche 10-12, wobei jeder Transferzylinder (81,82,83,84,85) nur zwischen zwei benachbarten Positionen verschoben wird.

14. Verfahren nach einem der Ansprüche 10-13, wobei eine Reaktionstemperatur eines zu behandelnden Stoffes über eine Verschiebung der Siedetemperatur des Stoffes eingestellt wird, in dem ein Mischer (71, 72, 73) unter Vakuum gesetzt wird.

15. Verfahren nach Anspruch 14, wobei in einem Homogenisierungsschritt ein Vakuum so eingestellt wird, dass eine Absenkung der Temperatur des Stoffes im wesentlichen genau einer Temperaturerhöhung bei einem Durchgang durch einen Düsenblock entspricht.

## Claims

1. A mixing reactor for the mixing and continuous extrusion of a substance, comprising at least one mixer (61, 62, 63) and an extrusion press (64), wherein the at least one mixer and the extrusion press are connected to one another by a transfer vehicle (77), and wherein a substance to be treated can be transferred from a filling-in position to at least one mixer, and to the subsequent extrusion press by means of at least one transfer cylinder (81, 82, 83, 84, 85) comprised in the transfer vehicle (77), enabling a finished mixture (89) to be discharged from the extrusion press as a continuous product.

2. A mixing reactor according to claim 1, wherein each mixer (61, 62, 63) comprises a lower, transferable transfer cylinder (81, 82, 83, 84, 85) and an upper, stationary mixing cylinder (71, 72, 73).

3. A mixing reactor according to claim 1 or 2, wherein each transfer cylinder (81, 82, 83, 84, 85) is allocated a press piston (68, 68', 68", 68"') which closes the base of the transfer cylinder even during transfer.

4. A mixing reactor according to any one of claims 1 to 3, wherein mixing parameters, in particular mixing pressure, mixing temperature and mixing speed of each mixer (61, 62, 63) can be set individually.

5. A mixing reactor according to any one of claims 1 to 4, wherein at least one of the mixers (61, 62, 63) comprises an installation with the following features: two tubular pressure cylinders (1, 2) and a nozzle block (6, 7) arranged between the pressure cylinders, wherein the nozzle block comprises at least one opening (18), in order to enable a passage of a substance (5) to be treated, from one press cylinder into the other press cylinder, wherein displaceable press pistons (3, 4) are present in the press cylinders, and wherein combined means (9, 11) for supplying a solid mixture constituent, and means for supplying a processing fluid to one of the two press cylinders are provided, as well as means for the controlled evaporation of the processing fluid (10, 12), wherein during the mixing process, the solid mixture constituents and processing fluid can be supplied simultaneously to the substance (5) to be treated, and the processing fluid can be discharged in stages.

6. A mixing reactor according to claim 5, wherein the different nozzle blocks (6, 7) comprise the same number of openings (18) but different opening diameters

7. A mixing reactor according to claim 5 or 6, wherein the at least one opening (18) of the nozzle block (6, 7) and a surface of one of the press pistons (3) comprise mutually corresponding shapes, wherein essentially all the substance (5) to be treated can be transferred from one press cylinder into the other by displacing the press piston (6).

8. A mixing reactor according to any one of the claims 5 to 7, wherein the solid mixture constituent is soot, the process fluid is water and the substance to be treated is raw rubber.

9. A mixing reactor according to any one of the claims 1 to 8, wherein all transfer cylinders (81, 82, 83, 84, 85) are equally distanced.

10. A method for the continuous discharge of a treated substance with a mixing reactor according to any one of claims 1 to 9, **characterised in that** a substance to be treated is filled into a frontmost, first transfer cylinder (81) and transferred to a first mixing position, whilst further transfer cylinders (82, 83, 84, 85) are simultaneously displaced each to a further mixing position, and/or in the case of a last transfer cylinder (84, 85), to an extrusion position.

11. A method according to claim 10 comprising the following steps:
a) filling a first transfer cylinder (81);
b) displacing all transfer cylinders (82, 83, 84, 85) by one position in a common direction;
c) conveying a substance located in the transfer cylinders through a nozzle block (66, 76, 86) provided with at least one opening, into an upper mixing cylinder (71, 72, 73) by way of displacing a press piston (68, 68', 68", 68"') allocated to a transfer cylinder, wherein, in the case of a last transfer cylinder (84, 85), the nozzle block is a special nozzle block (87) and the mixing cylinder is an extrusion cylinder (74);
d) transferring all transfer cylinders back in a common, but opposite direction;
e) repetition of the steps a) to d).

12. A method according to claim 11, wherein step a) is omitted at the close of a method.

13. A method according to any one of claims 10 to 12, wherein each transfer cylinder (81, 82, 83, 84, 85) is only displaced between two adjacent positions.

14. A method according to any one of claims 10 to 13, wherein a reaction temperature of a substance to be treated is set via shifting the boiling temperature of the substance by placing a mixer (71, 72, 73) under vacuum.

15. A method according to claim 14, wherein a vacuum is set in a homogenisation step, such that a reduction of the temperature of the substance corresponds essentially exactly to a temperature increase during a passage through a nozzle block.

## Revendications

1. Réacteur de mélange destiné à mélanger et produire en continu une substance, présentant au moins un mélangeur (61, 62, 63) et une presse d'extrusion (64), le ou les mélangeurs et la presse d'extrusion étant reliés mutuellement par un chariot de transfert (77) et une substance à traiter pouvant être transférée au moyen d'au moins un cylindre de transfert (81, 82, 83, 84, 85) installé dans le chariot de transfert (77) depuis une position de remplissage de substance jusqu'à au moins un mélangeur et à la presse d'extrusion qui le suit, de manière à pouvoir produire un mélange terminé (89) comme produit continu de la presse d'extrusion.

2. Réacteur de mélange selon la revendication 1, dans lequel chaque mélangeur (61, 62, 63) présente un cylindre inférieur de transfert (81, 82, 83, 84, 85) apte à être transféré et un cylindre supérieur de mélange (71, 72, 73) stationnaire.

3. Réacteur de mélange selon les revendications 1 ou 2, dans lequel un piston de presse (68, 68', 68", 68''') qui ferme vers le bas le cylindre de transfert même pendant un transfert est associé à chaque cylindre de transfert (81, 82, 83, 84, 85).

4. Réacteur de mélange selon l'une des revendications 1 à 3, dans lequel les paramètres de mélange, en particulier la pression de mélange, la température de mélange et la vitesse de mélange de chaque mélangeur (61, 62, 63) peuvent être réglés individuellement.

5. Réacteur de mélange selon l'une des revendications 1 à 4, dans lequel au moins l'un des mélangeurs (61, 62, 63) comporte un dispositif qui présente les caractéristiques suivantes :
deux cylindres tubulaires de poussée (1, 2),
un bloc de tuyères (6, 7) disposé entre les cylindres de poussée, le bloc de tuyères présentant au moins une ouverture (18) pour permettre le passage d'une substance (5) à traiter depuis un cylindre de poussée à l'autre cylindre de poussée,
des pistons coulissants de presse (3, 4) dans les cylindres de poussée,
des moyens combinés (9, 11) qui amènent un composant solide du mélange,
des moyens qui amènent un liquide de traitement à l'un des deux cylindres de poussée,
des moyens de vaporisation contrôlée du liquide de traitement (10, 12),
les composants solides du mélange et le liquide de traitement pouvant être amenés simultanément à la substance (5) à traiter au cours de l'opération de mélange et le liquide de traitement pouvant être évacué progressivement.

6. Réacteur de mélange selon la revendication 5, dans lequel les différents blocs de tuyère (6, 7) présentent le même nombre d'ouvertures (18) mais des ouvertures de diamètres différents.

7. Réacteur de mélange selon les revendications 5 ou 6, dans lequel au moins une ouverture (18) du bloc de tuyères (6, 7) et la surface d'un des pistons de presse (3) ont des formes qui se correspondent mutuellement, le coulissement du piston de presse (6) permettant de transférer d'un cylindre de poussée à l'autre cylindre de poussée essentiellement la totalité de la substance (5) à traiter.

8. Réacteur de mélange selon l'une des revendications 5 à 7, dans lequel le composant solide du mélange est le noir de carbone, le liquide de traitement l'eau et la substance à traiter un caoutchouc brut.

9. Réacteur de mélange selon l'une des revendications 1 à 8, dans lequel tous les cylindres de transfert (81, 82, 83, 84, 85) sont disposés à même distance mutuelle.

10. Procédé de production en continu d'une substance traitée à l'aide d'un réacteur de mélange selon l'une des revendications 1 à 9,
**caractérisé en ce que**
une substance à traiter est placée dans un premier cylindre de transfert (81) situé en avant et est transférée dans une première position de mélange tandis que d'autres cylindres de transfert (82, 83, 84, 85) sont déplacés simultanément vers une autre position de mélange et/ou, dans le cas du dernier cylindre de transfert (84, 85), vers une position d'extrusion.

11. Procédé selon la revendication 10, présentant les étapes suivantes :
a) remplissage d'un premier cylindre de transfert (81),
b) déplacement de tous les cylindres de transfert (82, 83, 84, 85) d'une position dans une direction commune,
c) transport d'une substance présente dans les cylindres de transfert, par un bloc de tuyères (66, 76, 86) doté d'au moins une ouverture dans un cylindre supérieur de mélange (71, 72, 73) par déplacement d'un piston de presse (68, 68', 68'', 68"') associé à un cylindre de transfert, tandis que dans le cas du dernier cylindre de transfert (84, 85), le bloc de tuyères est un bloc de tuyères (87) spécial et le cylindre de mélange un cylindre d'extrusion (74),
d) retour de tous les cylindres de transfert dans une direction commune mais opposée et
e) répétition des étapes a) - d).

12. Procédé selon la revendication 11, dans lequel l'étape a) est supprimée pour terminer une opération.

13. Procédé selon l'une des revendications 10 à 12, dans lequel chaque cylindre de transfert (81, 82, 83, 84, 85) n'est déplacé qu'entre deux positions voisines.

14. Procédé selon l'une des revendications 10 à 13, dans lequel une température de réaction d'une substance à traiter est ajustée par déplacement de la température d'ébullition de la substance en plaçant un mélangeur (71, 72, 73) en dépression.

15. Procédé selon la revendication 14, dans lequel une dépression est établie au cours d'une étape d'homogénéisation de manière à ce que l'abaissement de la température de la substance corresponde de manière essentiellement exacte à une augmentation de température lors du passage à travers un bloc de tuyères.
